(19) Europäisches Patentamt
European Patent Office
Office européen des brevets

(11) **EP 2 958 737 B1**

(12) **EUROPÄISCHE PATENTSCHRIFT**

(45) Veröffentlichungstag und Bekanntmachung des Hinweises auf die Patenterteilung:
**12.04.2017 Patentblatt 2017/15**

(21) Anmeldenummer: **14705758.2**

(22) Anmeldetag: **19.02.2014**

(51) Int Cl.:
**B29C 70/46** (2006.01)   **D03D 1/00** (2006.01)
**D03D 11/00** (2006.01)   **F41H 5/04** (2006.01)

(86) Internationale Anmeldenummer:
**PCT/EP2014/053177**

(87) Internationale Veröffentlichungsnummer:
**WO 2014/128140 (28.08.2014 Gazette 2014/35)**

(54) **ZWEILAGIGE GEWEBESTRUKTUR MIT HOCHFESTEN UND THERMOPLASTISCHEN FASERN**

TWO-LAYER WOVEN FABRIC WITH HIGH-STRENGTH AND THERMOPLASTIC FIBERS

TISSU DOUBLE DOTÉ DE FIBRES THERMOPLASTIQUES ET FIBRES A HAUTE PERFORMANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.02.2013 EP 13155749**

(43) Veröffentlichungstag der Anmeldung:
**30.12.2015 Patentblatt 2015/53**

(73) Patentinhaber: **Teijin Aramid GmbH**
**42103 Wuppertal (DE)**

(72) Erfinder:
• **BÖTTGER, Christian**
**42897 Remscheid (DE)**
• **HARTERT, Rüdiger**
**42117 Wuppertal (DE)**

(74) Vertreter: **CPW GmbH**
**Kasinostraße 19-21**
**42103 Wuppertal (DE)**

(56) Entgegenhaltungen:
**WO-A2-2012/159723     US-A1- 2003 228 815**
**US-A1- 2007 099 526**

## Beschreibung

Die Erfindung betrifft einen penetrationshemmenden Artikel, der eine Gewebestruktur aufweist, wobei die Gewebestruktur hochfeste Fasern mit einer Festigkeit von wenigstens 1100 MPa gemäß ASTM D-885 und thermoplastische Fasern aufweist.

Um penetrationshemmende Artikel aus Gewebelagen von hochfesten Fasern herzustellen, wurde bisher ein Präimprägnierungsverfahren (prepreg) angewandt, bei dem auf eine Gewebelage ein Film oder Harz aufgebracht wurde. Nach dem Kalandrierschritt wurden mehrere präimprägnierte Gewebelagen gestapelt und unter hoher Temperatur und Druck zum gewünschten Material, z.B. Armierungsplatten, verpresst.

Diese Methode verursacht mehrere Probleme. Im Material, das auf das Gewebe von hochfesten Fasern kalandriert wird, befinden sich Lösungsmittel. Unter normalen atmosphärischen Bedingungen diffundiert das Lösungsmittel schnell, so dass auch der Harzfilm altert. Um dies zu vermeiden sind deshalb der gekühlte Transport und die gekühlte Lagerung der vorimprägnierten Gewebe nötig. Außerdem ist die Drapierbarkeit der Gewebelagen in kleinen Radien gering.

Das Kalandrieren der Gewebelagen ist außerdem sehr kostenaufwendig. Der zusätzliche Produktionsschritt kostet Zeit und Energie und eine Trennfolie zwischen Maschine und Harzfilm ist nötig, um das Verkleben des beschichteten Materials mit Teilen der Produktionsmaschinen aber auch der nächsten Rolllage (bei Herstellung einer Rollware) zu vermeiden.

Das Präimprägnierungsverfahren kann durch eine textiltechnische Lösung vermieden werden, wobei ein thermoplastisches Garn zusammen mit den hochfesten Garnen verwebt wird, sodass bei dem Verpressen und Formen des Artikels aus mehreren Gewebelagen unter erhöhter Temperatur und Druck der Thermoplast verflüssigt und die Gewebelagen wie ein Klebstoff miteinander verbindet.

Artikel aus mehreren Gewebelagen, auch für den ballistischen Schutz, sind allgemein bekannt. Auch die Verwendung von Hybridgeweben aus thermoplastischen und hochfesten Fasern in einer dieser Gewebelagen ist bekannt.

US 5,168,006 beschreibt ein Gewebe in dem thermoplastische und hochfeste Fasern zusammen verwoben werden, um anschließend zu Formmaterialien verpresst zu werden. Hier werden beide Fasern in einem Kettbaumsystem jeweils parallel als Kett- und Schußfäden verwoben. Das Gewebe ist gekennzeichnet durch einen hohen Thermoplastanteil.

Auch die Vermeidung des Präimprägnierungsverfahrens durch textiltechnische Maßnahmen ist bekannt.

EP0417827 beschreibt ein Gewebe aus thermoplastischen Fasern und hochfesten Fasern, das als präimprägniertes Material zur Herstellung von u.a. Schutzkleidung (Helme) verwendet werden kann. Vorbehandelte thermoplastische Fasern werden mit den hochfesten Fasern zu Faserbündeln gefügt, die anschließend verwebt werden, wobei die hochfesten Fasern einen Anteil von vorzugsweise 40-60% am Gewebe haben.

Die in den veröffentlichten Schriften beschriebenen Artikel weisen allerdings nachteilig nur eine geringe penetrationshemmende Wirkung auf und zudem ist die Drapierbarkeit der Artikel gering. Der zuletzt genannte Effekt tritt dabei hauptsächlich auf Grund des hohen thermoplastischen Anteils im Gewebe auf.

Im Dokument DE 10 2011 102 342 wird ein Mehrlagentextil mit mindestens einer Doppellage beschrieben. Eine erste Schicht dieses Mehrlagentextils weist Verstärkungsfäden auf wohingegen eine zweite Schicht des Mehrlagentextils Matrixfäden aufweist. Die Verstärkungsfäden sollen in dem Mehrlagentextil strukturiert angeordnet sein [0009], also beispielsweise ein Gelege bilden. Die beiden Schichten werden über Bindefäden miteinander verbunden. In dem Dokument ist nicht beschrieben, dass die strukturiert angeordneten Verstärkungsfäden ein Gewebe aus Verstärkungsfäden bilden. Als bevorzugten Ausgestaltung des Mehrlagentextils wird die Advanced Synchron Weave Struktur genannt [0016] (beschrieben in EP 0408830). Bei dieser Struktur bilden die Verstärkungsfasern zwei zueinander verkreuzte Gelegelagen und die Matrixfäden halten die Verstärkungsfäden durch durchgreifende Oberschußfäden oder Unterschußfäden zusammen. Das Matrixmaterial befindet sich folglich zwischen dem Verstärkungsfasern. Das Ziel der Erfindung nach DE 10 2011 102$_{342}$ ist die ideale gleichmäßige Verteilung der Matrixfäden, so dass beim Aufschmelzen des Matrixmaterials jedes Filament der Verstärkungsfasern mit dem Matrixmaterial benetzt ist. Um dies zu erreichen, dürfen die Verstärkungsfäden nicht als Gewebe vorliegen, da sonst eine gleichmäßige Verteilung des Matrixmaterials an den Kreuzungspunkten des Gewebes nicht möglich wäre. Zudem ist die Einbringung des Matrixmaterials in ein solches Gewebe aus Verstärkungsfasern schwieriger. Das in diesem Dokument genannte Flächentextil kann als Außenhaut für Flugzeuge, Kraftfahrzeuge oder andere Fahrzeuge eingesetzt werden [0022]. Dadurch dass die Filamente der Verstärkungsfasern von dem Matrixmaterial gleichmäßig benetzt sind, würde sich die ballistische Halteleistung wesentlich verringern so dass das Material der DE 10 2011 102$_{342}$ nicht für antiballistische Zwecke verwendet werden kann.

Die Aufgabe der vorliegenden Erfindung ist deshalb, die aus dem Stand der Technik beschriebenen Nachteile zu beseitigen oder zumindest zu verringern.

Die Aufgabe wird gelöst durch einen penetrationshemmenden Artikel

nach den unabhängigen Ansprüchen 1 und 2. Hierbei

liegen die thermoplastischen Fasern in der Gewebestruktur in Form eines ersten Gewebes oder in Form eines Geleges vor. Liegen die thermoplastischen Fasern in Form eines Geleges vor, so bilden die thermoplastischen Fasern bevorzugt ein unidirektionales Gelege. Unter einem unidirektionalen Gelege soll verstanden werden, wenn Fasern (Monofilament oder Mutifilamente) in etwa parallel zueinander in einer Ebene angeordnet sind.

In der Ausführungsform, in der die thermoplastischen Fasern in Form eines ersten Gewebes vorliegen, werden das erste und das zweite Gewebe der Gewebestruktur bevorzugt durch Kett- und/oder Schussfäden der ersten Gewebelage (also durch thermoplastische Fasern) mit dem zweiten Gewebe (aus hochfesten Fasern) verbunden. Das bedeutet, dass das Gewebe aus hochfesten Fasern durch thermoplastische Fasern an das Gewebe aus thermoplastischen Fasern gebunden ist.

In der Ausführungsform, in der die thermoplastischen Fasern als Gelege (bevorzugt als unidirektionales Gelege) in der Gewebestruktur vorliegen, erfolgt eine Verbindung vorzugsweise über mindestens einen Kettund/oder Schussfaden des zweiten Gewebes. Das bedeutet, dass die Verbindung des Gewebes aus hochfesten Fasern mit dem Gelege aus thermoplastischen Fasern durch Kett- und/oder Schussfäden aus hochfesten Fasern erfolgt.

In beiden Ausführungsformen (thermoplastische Fasern liegen als Gewebe oder als Gelege vor) erfolgt die Verbindung zwischen dem zweiten Gewebe aus hochfesten Fasern und den thermoplastischen Fasern durch eine webtechnische Verbindung. Kein zusätzlicher Bindefaden oder kein zusätzliches nicht textiles Bindungsmittel (beispielsweise Klebefilme oder Folien) für die Verbindung zwischen der zweite Gewebelage und den thermoplastischen Fasern werden benötigt. In vorteilhafter Weise befinden sich die thermoplastischen Fasern nicht verwebt im Gewebe aus hochfesten Fasern, so dass die hochfesten Fasern sich innerhalb ihrer Gewebelage bewegen können. Hierdurch wird die ballistische Halteleistung der hochfesten Fasern deutlich verbessert. Weiterhin ist vorteilhaft, dass die thermoplastischen Fasern auf dem Gewebe aus hochfesten Fasern aufliegen. Beim Schmelzen der thermoplastischen Fasern entsteht eine dünne Schicht aus thermoplastischem Material auf der Oberfläche der Gewebelage aus hochfesten Fasern, das thermoplastische Material dringt aber nicht in die Gewebelage aus hochfesten Fasern ein (es erfolgt also keine Imprägnierung der Gewebelage aus hochfesten Fasern mit dem geschmolzenen thermoplastischen Material). Auch durch diesen Effekt wird die ballistische Halteleistung der hochfesten Fasern im Gewebe verbessert beziehungsweise erhalten (kontrollierte Delaminierung bei Beschuss ist möglich).

Zu besseren Lesbarkeit der Beschreibung soll das erste Gewebe der Gewebestruktur in der weiteren Beschreibung auch als erste Gewebelage (thermoplastische Gewebelage) und das zweite Gewebe der Gewebestruktur auch als zweite Gewebelage (hochfeste Gewebelage) bezeichnet werden.

Die Gewebestruktur bildet ein Doppelgewebe. Unter einem Doppelgewebe sollen zwei Gewebelagen verstanden werden, die jede für sich gewebt sind, die aber über Verknüpfungspunkte miteinander in Kontakt stehen. Bei einer Doppelgewebelage liegen zwei Gewebelagen vor, die beispielsweise aufeinander liegen können. Unter einem Doppelgewebe soll jedoch auch verstanden werden, wenn ein Gewebe vorliegt und eine weitere Lage unidirektionaler Fasern auf dieser Gewebelage aufliegt und über einen Kett- und/oder Schussfaden der Gewebelage mit diesem verbunden ist. In einem solchen Fall wird das Doppelgewebe als 1.5 Doppelgewebe bezeichnet.

In der weiteren Beschreibung werden die Begriffe Gewebestruktur und Doppelgewebe synonym verwendet.

Vorzugsweise haben die thermoplastischen Fasern einen Gewichtsanteil bezogen auf das Gewicht des Doppelgewebes von 8 bis 20%, besonders bevorzugt von 10 bis 15%.

Der genannte Gewichtsanteil der thermoplastischen Fasern resultiert dabei bevorzugt fast ausschließlich aus den thermoplastischen Fasern der ersten Gewebelage oder der ersten Gelegelage aus thermoplastischen Fasern (thermoplastische Lage). Der thermoplastische Anteil am Gesamtgewicht des Doppelgewebes sollte niedrig gewählt werden, um einen hohen Anteil an hochfesten Fasern zu ermöglichen. Die primäre Aufgabe der thermoplastischen Lage liegt in der Verklebung der zweiten Gewebelage aus hochfesten Fasern mit anderen (weiteren) Textillagen zu einem penetrationshemmenden Artikel. Die Aufgabe des zweiten Gewebes aus hochfesten Fasern liegt hingegen überwiegend darin, die Festigkeit und die Elastizität des Artikels zu beeinflussen. Bei einer Verwendung der Gewebestruktur in einem antiballistischen Artikel bestimmt das zweite Gewebe aus hochfesten Fasern die ballistische Leistung des antiballistischen Artikels.

Vorzugsweise haben die hochfesten Fasern einen Anteil am Gesamtgewicht des Doppelgewebes von 65 -95%, besonders bevorzugt von 80-95% und ganz besonders bevorzugt von mindestens 85-90%. Vorzugsweise resultiert der Gewichtsanteil der hochfesten Fasern fast ausschließlich aus den hochfesten Fasern der zweiten Gewebelage (hochfeste Gewebelage). Folglich liegen bevorzugt die hochfesten Fasern mit einer Festigkeit von wenigstens 1100 MPa gemäß ASTM D-885 fast ausschließlich und ganz besonders bevorzugt ausschließlich im zweiten Gewebe des Doppelgewebes vor.

Bevorzugt ist das zweite Gewebe aus hochfesten Fasern mit den thermoplastischen Fasern über Anknüpfungspunkte verbunden. Vorzugsweise weist eine Fläche von 100 cm$^2$ der Doppelgewebelage 20 bis 150 Anknüpfungspunkte zwischen den thermoplastischen Fasern und dem hochfesten Gewebe auf. Besonders bevorzugt weist eine Fläche von 100 cm$^2$ der Doppelgewebelage 30 bis 50 Anknüpfungspunkte zwischen den thermoplastischen Fasern und dem hochfesten Gewebe auf.

Wenn die thermoplastischen Fasern in Form eines ersten Gewebes in der Gewebestruktur vorliegen, stehen die beiden Gewebelagen des Doppelgewebes über ihre Kett- und/oder Schussfäden miteinander in Kontakt zueinander, so dass keine weiteren zusätzlichen Kontaktfäden verwendet werden müssen. Beispielsweise kann jeder vierte Kettfaden der ersten Gewebelage (thermoplastische Gewebelage) an diskreten Punkten mit dem Schussfaden der zweiten Gewebelage (hochfeste Gewebelage) verwebt werden. Diese diskreten Anknüpfungspunkte können regelmäßig wiederkehrend oder zufällig wiederkehrend im Doppelgewebe vorliegen.

Vorzugsweise sind die Anknüpfungspunkte zur Verbindung der thermoplastischen Fasern mit der zweiten Gewebelage (hochfeste Gewebelage) sogenannte An- oder Abbindungen, wenn die hochfesten Fasern eine erste Gewebelage bilden. Unter einer Anbindung soll dabei verstanden werden, wenn ein Schussfaden einer unteren Gewebelage mit einem Kettfaden einer oberen Gewebelage verbunden wird. Beispielsweise kann bei einer Verbindung der ersten und zweiten Gewebelage durch Anbindungen Schussfäden der zweiten Gewebelage (hochfeste Gewebelage) mit Kettfäden der ersten Gewebelage (thermoplastische Gewebelage) verbunden werden. Unter einer Abbindung soll verstanden werden, wenn es eine Verbindung zwischen der Kette einer unteren Gewebelage und dem Schuss einer oberen Gewebelage gibt. Beispielsweise kann die erste und zweite Gewebelage durch Abbindungen verbunden werden, wobei Kettfäden der zweiten Gewebelage (hochfeste Gewebelage) mit Schussfäden der ersten Gewebelage (thermoplastische Gewebelage) verbunden werden.

Die Anzahl der Anknüpfungspunkte pro Fläche im Doppelgewebe hat einen Einfluss auf die Drapierbarkeit des ballistischen Elements. Je weniger Anknüpfungspunkte zwischen der ersten Gewebelage (thermoplastische Gewebelage) und der zweiten Gewebelage (hochfeste Gewebelage) im Doppelgewebe vorliegen, desto besser ist das Doppelgewebe vor beziehungsweise während dem Verpressen drapierbar. Mehr noch als die Anzahl der Anknüpfungspunkte hat aber die Trennung von thermoplastischem Material und hochfesten Fasern Auswirkung auf die Drapierbarkeit.

Liegen die thermoplastischen Fasern in Form eines Geleges und bevorzugt in Form eines unidirektionalen Geleges vor, so erfolgt bevorzugt eine Verbindung der zweiten Gewebelage (hochfeste Fasern) mit den thermoplastischen Fasern über mindestens einen Kett- und/oder Schussfaden des zweiten Gewebes. Vorzugsweise wird dabei mindestens eine thermoplastische Faser von einem Kett- und/oder Schussfaden an das zweite Gewebe gebunden. Auch hier gilt, dass die Drapierbarkeit auch von der Anzahl der Verbindungen der thermoplastischen Gelegelage und der Gewebelage aus hochfesten Fasern beeinflusst wird. Die Trennung von thermoplastischen Fasern und hochfesten Fasern hat aber auch hier den größten Effekt auf die Drapierbarkeit der Gewebestruktur.

Unerwartet hat es sich als vorteilhaft für die ballistische Anwendung herausgestellt, wenn sich der Thermoplast (also die thermoplastischen Fasern) überwiegend nur zwischen den Lagen aus hochfesten Fasern (zweite Gewebelage) befindet und nicht zwischen den hochfesten Fasern selber. Durch das Imprägnieren der hochfesten Fasern mit dem thermoplastischen Material wird nämlich die Energieabsorption der hochfesten Fasern verringert, wodurch die penetrationshemmende Wirkung verringert wird. Ein hoher Gewichtsanteil von hochfesten Fasern hat sich dabei als wichtig für die physikalischen Eigenschaften des Gewebes dargestellt, im Besonderen für den ballistischen / penetrationshemmenden Schutz.

Bei allen bisher im Stand der Technik genannten Artikeln liegen thermoplastische und hochfeste Fasern parallel in einem Gewebe vor, so dass es beim Erhitzen und Verpressen der Thermoplast auch zwischen den hochfesten Fasern verteilt wird. Die hochfesten Fasern können sich dann in dem entstandenen Artikel weniger bewegen und können so bei einem Beschuss weniger Energie absorbieren, bevor es zu einer Zerstörung der Faser kommt. Außerdem ist der Gewichtsanteil der Thermoplaste im Gewebe relativ hoch, wodurch auch das Gewicht des fertigen Artikels hoch wird. Nachteilig bei den bisher üblichen Verbindungen von Geweben mit thermoplastischem Material ist auch, dass häufig die Verbindung zwischen thermoplastischen Material und Gewebe sehr fest gewählt wird (beispielsweise durch einen hohen Thermoplast Anteil und vielen Verknüpfungspunkten zwischen Thermoplast und Gewebe). Bei antiballistischen Materialien ist eine solche feste Verbindung allerdings nachteilig, da zur Energieumwandlung (im Fall eines Beschusses) eine kontrollierte Delaminierung gewünscht ist. Bei einem festen Verbund würde die Kugel den Verbund durchschlagen und dabei weniger Energie verlieren, als wenn es zu einer kontrollierten Delaminierung kommen würde.

Bevorzugt wird als Material für die thermoplastischen Fasern ein thermoplastisches Polymer verwendet. Besonders bevorzugt wird als Material für die thermoplastischen Fasern Polyamid, Polyester oder Polyurethan gewählt. Besonders bevorzugt bestehen die thermoplastischen Fasern teilweise oder vollständig aus Polyamid, insbesondere Polyamid-11 oder Polyamid-12 (PA-12). In einer bevorzugten Ausführungsform besteht die erste Gewebelage oder die erste Gelegelage (thermoplastische Lage) vollständig aus Polyamid, Polyester oder Polyurethan, besonders bevorzugt Polyamid, insbesondere Polyamid-11 oder Polyamid-12 (PA-12). Die genannten thermoplastischen Fasern können als Monofilamente und/oder als Multifilamente in der ersten Lage (thermoplastische Lage) des Doppelgewebes vorliegen. Die Verwendung von PA-12 hat den Vorteil, dass es chemisch inert ist und wenig Feuchtigkeit aufnimmt. Dadurch ist das spätere Verpressen einfacher und weniger energieaufwändig. Außerdem ähnelt der Schmelzpunkt von PA-12 dem des im Präimprägnierverfahren verwendeten Harzes, sodass die gleichen Maschinen zur Verpressung des Doppelgewebes genutzt werden können, wie vorher mit den vorimprägnierten Geweben. Ferner ist PA-12 ein günstiger Grundstoff. PA 12 hat zudem eine vorteilhafte hohe Temperaturbeständigkeit bis zu etwa 160 °C.

Wenn die thermoplastischen Fasern der ersten Lage in Form eines Gewebes vorliegen, so weist diese erste Gewebelage bevorzugt eine Gewebedichte nach Walz auf, die bei oder noch bevorzugter unter 30% liegt. Besonders bevorzugt liegt die Gewebedichte nach Walz der ersten Gewebelage bei beziehungsweise unter 20% ganz besonders bevorzugt bei beziehungsweise unter 15 %.

Weiterhin bevorzugt weist die zweite Gewebelage (hochfeste Gewebelage) der Doppelgewebelage eine Gewebedichte nach Walz auf die über 30 % liegt. Über 30% bedeutet hierbei, dass 30% nicht mit enthalten sind. Besonders bevorzugt weist die zweite Gewebelage eine Gewebedichte nach Walz von über 45%, ganz besonders bevorzugt von über 50% auf.

Die Gewebedichte nach Walz (DG) wurde folgendermaßen berechnet:

$$DG = (d_k + d_s)^2 \ X \ f_k \ X \ f_s$$

Hierbei bedeuten:

$d_k$ = Substanzdurchmesser des Kettgarns in mm;
$d_s$ = Substanzdurchmesser des Schussgarns in mm;
$f_k$ = Kettfäden pro cm
$f_s$ = Schussfäden pro cm

Der Substanzdurchmesser $d_k$ beziehungsweise $d_s$ der Garne wird wie folgt berechnet:

$$d = \frac{\sqrt{Titer}}{88,5 \ X \sqrt{Dichte}}$$

wobei d entweder $d_k$ oder $d_s$ bedeutet und der Titer des entsprechenden Garns in dtex und die Dichte des Garns in g/cm3 eingesetzt wird.

Die nach der Formel berechnete Gewebedichte gilt für Gewebe in Leinwandbindung. Liegen von der Leinwandbindung abweichende Bindungen vor, so muss ein Bindungs-Korrekturfaktor in die Berechnung einbezogen werden. Für diesen Bindungs-Korrekturfaktor werden beispielsweise bei Geweben mit speziellen Bindungsarten folgende Werte eingesetzt:

| | |
|---|---|
| Panamabindungen 2:2 | 0,56 |
| Köperbindungen 2:1 | 0,70 |
| Köperbindungen 2:2 | 0,56 |
| Köperbindungen 3:1 | 0,56 |
| Köperbindungen 4:4 | 0,38 |
| Atlasbindung 1:4 | 0,49 |
| Atlasbindung 1:5 | 0,44 |

Mit diesen Korrekturfaktoren wird die gemäß der Formel errechnete Gewebedichte nach Walz DG multipliziert. Die Gewebedichte wird in % angegeben.

Wie die Gewebedichte für andere Gewebetypen (für die der Korrekturfaktor nicht angegeben wurde) bestimmt werden kann wird in "Textil-Praxis", Ausgabe 2, 1947 (Robert Kochhammer Verlag, Stuttgart) auf Seite 330 bis 335 und 366 bis 370 von den Autoren F. Walz und J. Luibrand beschrieben.

Liegen die thermoplastischen Fasern der ersten Lage in Form eines Gewebes vor, so weist diese erste Gewebelage (thermoplastisches Gewebe) und/oder die zweite Gewebelage (hochfestes Gewebe) bevorzugt in Kette und Schuss jeweils die gleiche Fadenzahl auf. Das bedeutet, dass eine symmetrische Bindung innerhalb der Gewebe vorliegt, bei der die Anzahl der Kettfäden gleich der Anzahl der Schussfäden ist.

Die hochfesten Fasern haben eine Festigkeit von wenigstens 1100 MPa gemäß ASTM D-885, vorzugsweise eine Festigkeit von mehr als 2000 MPa gemäß ASTM D-885.

Bevorzugt sind die hochfesten Fasern Fasern aus Aramiden (vorzugsweise Poly (p-phenylenterephthalamid) oder Aramid-Co-Polymere, Fasern aus Polyethylen mit einem ultrahohem Molekulargewicht, Fasern aus Polypropylen mit ultrahohem Molekulargewicht, Polybenzoxazolfasern oder Polybenzothiazolfasern. Besonders bevorzugt weist die zweite Gewebelage (hochfeste Gewebelage) Aramidfasern, wie beispielsweise Fasern der Marke Twaron® der Firma Teijin Aramid auf. Ganz besonders bevorzugt ist die zweite Gewebelage (hochfeste Gewebelage) zu über 90% aus den Aramidfasern gebildet.

Vorzugsweise liegen die Aramidfasern in Form eines Multifilamentgarns in der zweiten Gewebelage (hochfeste Gewebelage) vor.

In dem Ausführungsbeispiel, bei dem die thermoplastischen Fasern in Form eines ersten Gewebes vorliegen, weisen die thermoplastischen Fasern oder Fäden der ersten Gewebelage (thermoplastische Gewebelage) die gleiche mittlere Einarbeitung im Gewebe auf, wie die Fäden, die die zweite Gewebelage (hochfeste Gewebelage) bilden. Unter einer gleichen mittleren Einarbeitung soll verstanden werden, wenn der Mittelwert der webbedingten Längenänderung der Kettfäden und/oder Schussfäden der ersten Gewebelage in etwa gleich dem Mittelwert der webbedingten Längenänderung der Kettfäden und/oder Schussfäden der zweiten Gewebelage ist. Die Fäden, die beide Gewebelagen miteinander verbinden sollen, werden bei der Berechnung der mittleren Einarbeitung nicht berücksichtigt. Vorzugsweise ist die mittlere Fadenlänge der Kettfäden der ersten Gewebelage und die mittlere Fadenlänge der Kettfäden der zweiten Gewebelage in etwa gleich lang. Weiterhin bevorzugt ist die mittlere Fadenlänge der Schussfäden der ersten Gewebelage in etwa gleich lang wie die mittlere Fadenlänge der Schussfäden der zweiten Gewebelage. In einer anderen Ausführungsform haben die Kettfäden einer Gewebelage (erste oder zweite Gewebelage) eine mittlere Einarbeitung, die in etwa der mittleren Einarbeitung der Schussfäden der gleichen Gewebelage (erste oder zweite Gewebelage) entspricht. Das bedeutet, dass die mittlere Länge der Kettfäden in etwa gleich der mittleren Länge der Schussfäden in einer Gewebelage (erste oder zweite Gewebelage) ist. In etwa gleich lang bedeutet, dass die Länge der Fäden nur um etwa 20 bis 30% variiert. In der Doppelgewebelage können sowohl die Gewebelagen untereinander die in etwa gleiche mittlere Einarbeitung haben als auch innerhalb jeder Gewebelage die in etwa gleiche mittlere Einarbeitung vorliegen. Die mittlere Einarbeitung wird nach dem internationalen Standard ISO 7211/3 bestimmt, wobei als Vorspannung 2 cN/tex für die Fasern der hochfesten Gewebelage und 0,5 cN/tex für die Fasern der thermoplastischen Gewebelage gewählt werden.

In dem Ausführungsbeispiel, bei dem die thermoplastischen Fasern in Form eines Geleges, besonders bevorzugt in Form eines unidirektionalen Geleges, vorliegen, haben die Kett- und/oder Schussfäden der hochfesten Gewebelage in etwa alle die gleiche mittlere Einarbeitung. Besonders bevorzugt haben alle Kettfäden der zweiten Gewebelage in etwa die gleiche mittlere Einarbeitung und alle Schussfäden der zweiten Gewebelage haben in etwa die gleiche mittlere Einarbeitung. Eine solche etwa gleiche mittlere Einarbeitung ist möglich, wenn die Verbindungen zu den thermoplastischen Fasern symmetrisch über das zweite Gewebe verteilt werden. Bezüglich der Begriffserklärung zur mittleren Einarbeitung gilt die bereits gegebene Erklärung.

Ein weiterer Gegenstand der Erfindung ist ein Verfahren zur Herstellung eines penetrationshemmenden Artikels umfassend mindestens eine Gewebestruktur, welche thermoplastische Fasern und hochfeste Fasern aufweist, wobei die hochfesten Fasern eine Festigkeit von wenigstens 1100 MPa gemäß ASTM D-885 haben, wobei die Gewebestruktur ein zweites Gewebe aus hochfesten Fasern aufweist und die thermoplastischen Fasern auf dem zweiten Gewebe aufliegen und über mindestens einen Kett- und/oder Schussfaden mit dem zweiten Gewebe verbunden sind, wobei die thermoplastischen Fasern einen Gewichtsanteil bezogen auf das Gewicht des Doppelgewebes von 5 bis 35% haben.

In einer Ausführungsform, in der die thermoplastischen Fasern in Form eines ersten Gewebes in der Gewebestruktur vorliegen, ist es bevorzugt, wenn das erste und das zweite Gewebe zur Herstellung der Doppelgewebelage (Gewebestruktur) mit je einem getrennten Kettbaum gewebt werden.

Bevorzugt wird eine Fläche von 100 cm² der Doppelgewebelage mit 20 bis 150 Anknüpfungspunkte zwischen den thermoplastischen Fasern und dem zweiten Gewebe hergestellt.

Vorzugsweise wird das zweite Gewebe (hochfeste Gewebelage) in einer Leinwand-, Panama, oder Köperbindung gewebt.

Es wird mindestens eine der beschriebenen Gewebestruktur mit mindestens einer weiteren Textillage unter Druck und einer Temperatur gleich oder höher dem Schmelzpunkt der thermoplastischen Faser und unter dem Schmelzpunkt der hochfesten Faser ohne Präimprägnierung zu einer Platten verpresst.

Die weitere Textillage soll bevorzugt durch Textilflächentechniken gebildet werden und kann beispielseisweise eine gewirkte, genadelte, geraschelte, gewebte oder gestrickte Lage sein. Die weitere Textillage kann auch als eine Multiaxialware ausgebildet sein.

Vorzugsweise weist die weitere Textillage hochfeste Fasern mit einer Festigkeit von wenigstens 1100 MPa gemäß ASTM D-885 auf. Besonders bevorzugt ist die weitere Textillage zu mindestens 80%, ganz besonders bevorzugt zu 90% aus den genannten hochfesten Fasern hergestellt.

Bevorzugt sind die hochfesten Fasern der weiteren Textillage Aramidfasern, Fasern aus Polyethylen mit einem ultrahohem Molekulargewicht, Fasern aus Polypropylen mit ultrahohem Molekulargewicht, Polybenzoxazolfasern oder Polybenzoth iazolfasern.

Vorzugsweise ist die weitere Textillage eine weitere Lage der Gewebestruktur, wie in dieser Anmeldung beschrieben.

Eine oder eine Mehrzahl der beschriebenen Gewebestrukturen (verpresst beispielsweise mit einer oder einer Mehrzahl von weiterer Textillage) können in eine Folie verpackt (beispielsweise verschweißt) in einem antiballistischen Artikel verwendet werden. Die Folie kann beispielsweise eine hochelastische Polyurethanfolie auf Ester oder Ether Basis sein. Diese Folie ist vorzugsweise schwarz und hat eine Dicke von 75 bis 150 µm. Ein Beispiel für eine solche Folie ist Walopur® Platilon® U von epurexfilms (Bayer). Als Folie kann aber auch eine transluzente, aber UV undurchlässige Folie verwendet werden, in die die Gewebestrukturen (mit oder ohne weitere Textillage) eingelegt beziehungsweise von dieser umhüllt werden (beispielsweise durch Verschweißen). Transluzente, UV undurchlässige Folien erlauben, dass von Außerhalb der Umhüllung die Gewebestruktur gesehen werden kann. Wird beispielsweise ein antiballistisches Paket aus einer Mehrzahl von verpressten Gewebestrukturen und weiterer Textilalgen hergestellt, kann es sein, dass dieses antiballistische Paket eine Bedrohungsseite und eine Körperseite aufweist. Zur Kennzeichnung der verschiedenen Seiten kann auf eine oder jeder Seite des antiballistische Pakets ein oder zwei Hinweise (beispielsweise Schildchen) angebracht werden Diese Hinweise sind dann auch noch von Außen sichtbar, wenn sich das antiballistische Paket in der Folie befindet. Wird das antiballistische Paket zusammen mit der Folie in die Schutzweste eingeführt, kann vorteilhaft sichergestellt werden, dass das antiballistische Paket korrekt innerhalb der Schutzweste positioniert ist. Die Folie bildet bevorzugt eine Umhüllung um eine oder eine Mehrzahl der Gewebestrukturen und schützt diese vor Feuchtigkeit, Schmutz und UV-Licht. Als transluzente Folie kann beispielsweise Epurex blanc, Epurex ligth blue, Epurex dark blue, Epurex ligth yellow , Epurex yellow oder Epurex dark yellow (Bayer) verwendet werden.

Der penetrationshemmende Artikel gemäß Hauptansprüchen und Unteransprüchen kann zur Herstellung von penetrationshemmender Schutzkleidung, wie z.B. Westen, Helmen, Schutzschildern oder Panzerungselemente genutzt werden. Der penetrationshemmende Artikel soll bevorzugt stichschutz und/oder ballistische Eigenschaften aufweisen.

Ausführungsbeispiele der Erfindung werden mittels der Figuren 1 bis 6 dargestellt.

Figur 1 bis 4     zeigt eine dreidimensionale Darstellung einer möglichen Ausführungsform einer Gewebestruktur mit Anknüpfungspunkten.

Figur 5          zeigt eine Bindungspatrone eines Doppelgewebes mit Anknüpfungspunkten.

Figur 6 bis 7     zeigt schematisch eine weitere Ausführungsform einer Gewebestruktur.

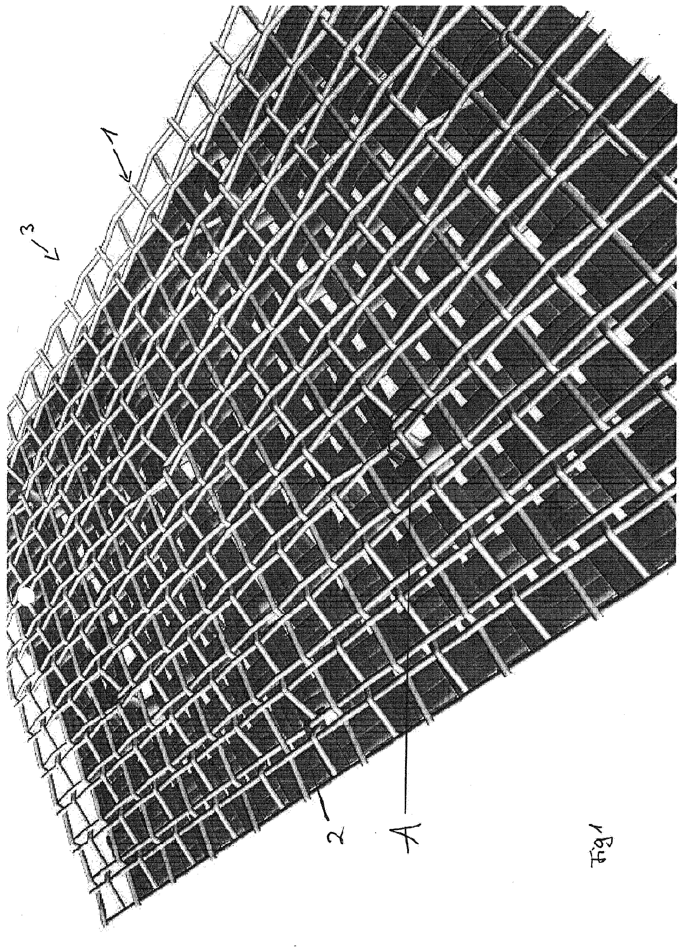

Figur 1 zeigt beispielhaft eine mögliche Ausgestaltung der Erfindung, bei der die thermoplastischen Fasern in einer ersten Gewebelage 1 und die hochfesten Fasern in einer zweiten Gewebelage 2 in einer Gewebestruktur 3 vorliegen. Die Gewebestruktur 3 wird im Folgenden auch als Doppelgewebe bezeichnet. In dem Doppelgewebe 3 sind an regelmäßig auftretenden Stellen (A) Anknüpfungspunkte zwischen dem ersten Gewebe 1 mit dem darunter befindlichen zweiten Gewebe 2 gebildet worden. Das erste Gewebe 1 kann beispielsweise aus thermoplastischen Fasern 4 hergestellt sein und das zweite Gewebe 2 aus hochfesten Fasern 5, wie beispielsweise Aramid (bevorzugt Para-Aramid). Die thermoplastischen Fasern 4 liegen folglich auf dem zweiten Gewebe 2 auf. Wie in Figur 1 zu sehen ist, ist das zweite Gewebe 2 symmetrisch aufgebaut, das heißt, dass die Anzahl der Kettfäden gleich der Anzahl der Schussfäden im zweiten Gewebe 2 ist.

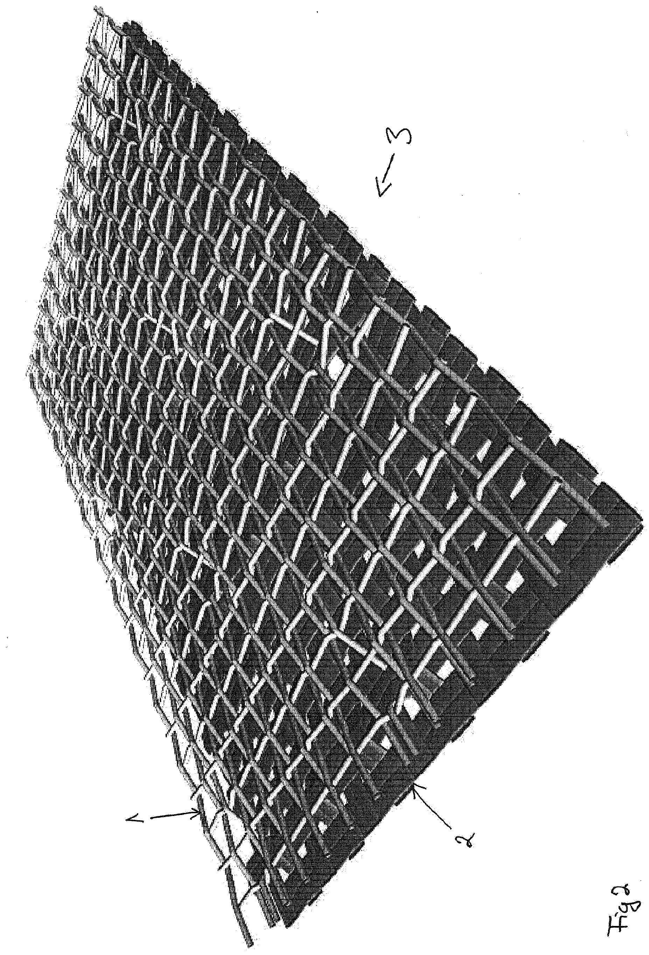

Figur 2 zeigt ebenfalls eine dreidimensionale Darstellung des Doppelgewebes 3 mit einem ersten Gewebe 1 und einem zweiten Gewebe 2.

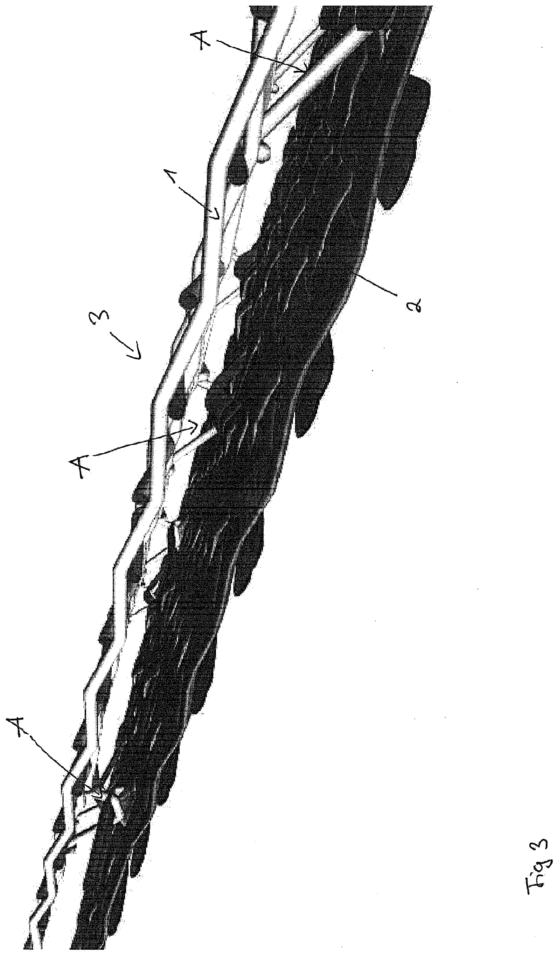

Die Figur 3 zeigt schematisch das Doppelgewebe 3, wobei das erste Gewebe 1 zur besseren Veranschaulichung beabstandet zum zweiten Gewebe 2 dargestellt ist. Zu erkennen ist in dieser Darstellung, dass Fäden der ersten Gewebelage 1 mit dem zweiten Gewebe 2 verwebt sind, so dass Anknüpfungspunkte A zwischen dem ersten Gewebe 1 und dem zweiten Gewebe 2 gebildet werden. Es ist auch deutlich zu sehen, dass trotz der Anknüpfungspunkte A zwei separate Gewebelagen 1, 2 vorliegen und die Fäden des ersten Gewebes 1 im Wesentlichen nicht mit in der Gewebelage des zweiten Gewebes 2 liegen. Das erste Gewebe 1 liegt somit auf dem zweiten Gewebe 2 auf und ist über vereinzelte Anknüpfungspunkte A mit dem zweiten Gewebe 2 verbunden. Vorzugsweise liegen 90% der Fläche des ersten Gewebes 1 auf dem zweiten Gewebe 2 auf. Weiterhin bevorzugt liegt das erste Gewebe 1 im Wesentlichen parallel zu dem zweiten Gewebe 2.

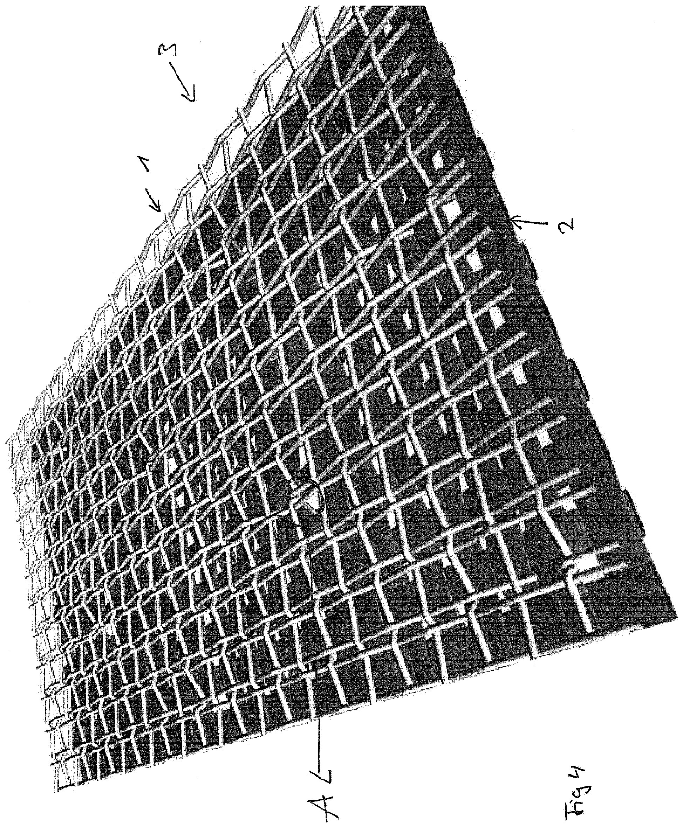

Figur 4 zeigt eine weitere Darstellung einer Doppelgewebelage 3.

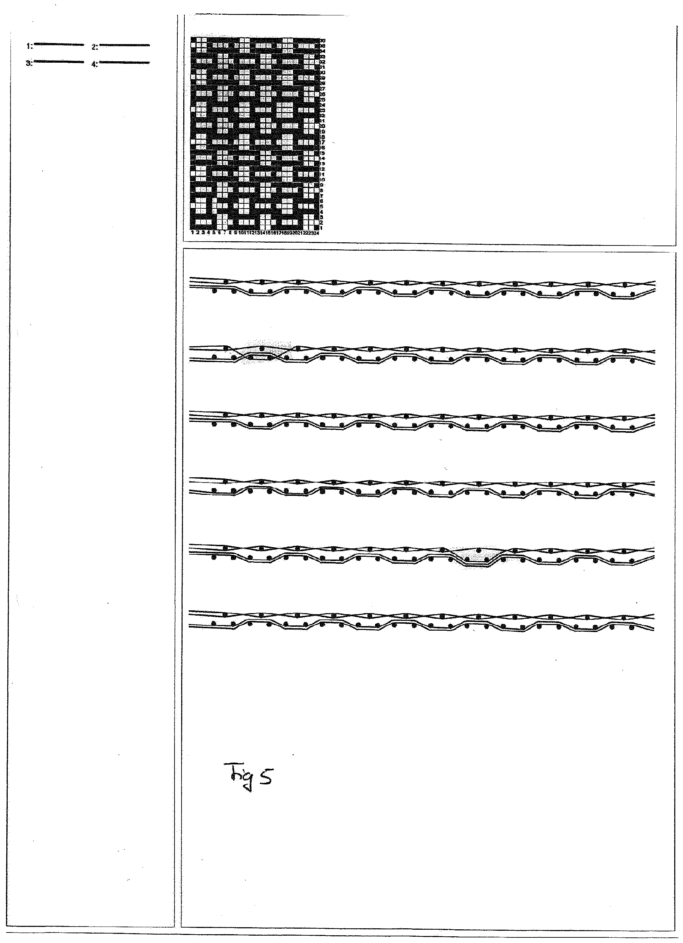

Figur 5 zeigt im oberen Bereich der Figur eine Bindungspatrone und im unteren Bereich der Figur eine Darstellung der Bindung im Querschnitt.

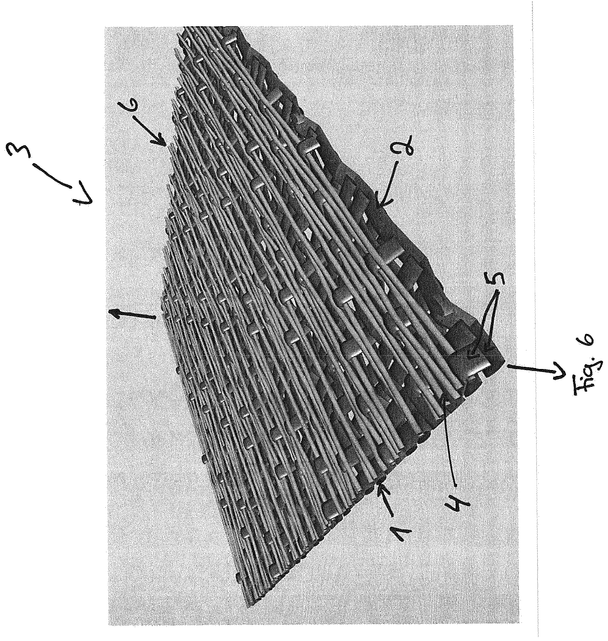

In Figur 6 ist eine weitere Ausführungsform der Gewebestruktur 3 dargestellt. In diesem Ausführungsbeispiel bilden die hochfesten Fasern 5 ein zweites Gewebe 2, auf dem thermoplastische Fasern 4 aufliegen. Die thermoplastischen Fasern 4 bilden eine Gelegelage 6, die - wie im Beispiel dargestellt - eine unidirektionale Gelegelage sein kann. Im Ausführungsbeispiel weist die zweite Gewebelage eine Panamabindung auf. Die thermoplastischen Fasern 4 werden über Kettfäden der zweiten Gewebelage (also durch hochfeste Fasern 5) mit der zweiten Gewebelage 2 verbunden. Durch die Verbindung zwischen hochfesten Fasern 5 mit thermoplastischen Fasern 4 entsteht auch eine Art Gewebe aus thermoplastischen Fasern 4 und hochfesten Fasern 5, so dass auch in diesem Ausführungsbeispiel von einem Doppelgewebe 3 gesprochen werden kann. Das erste Gewebe 1 wird dabei durch thermoplastische Fasern 4 und hochfesten Fasern in Kette gebildet und das zweite Gewebe 2 wird durch hochfeste Fasern 5 in Kette und Schuss gebildet. Die Verbindung der thermoplastischen Fasern 4 mit dem zweiten Gewebe 2 aus hochfesten Fasern 5 erfolgt symmetrisch über das Doppelgewebe 3 verteilt, wie der Pfeil andeutet. Hierdurch weisen die Kettfäden des zweiten Gewebes 2 im Wesentlichen alle die gleiche mittlere Einarbeitung in das zweite Gewebe 2 auf, da alle Kettfäden im Wesentlichen die Gleiche Anzahl an Verbindungen mit den thermoplastischen Fasern 4 eingehen.

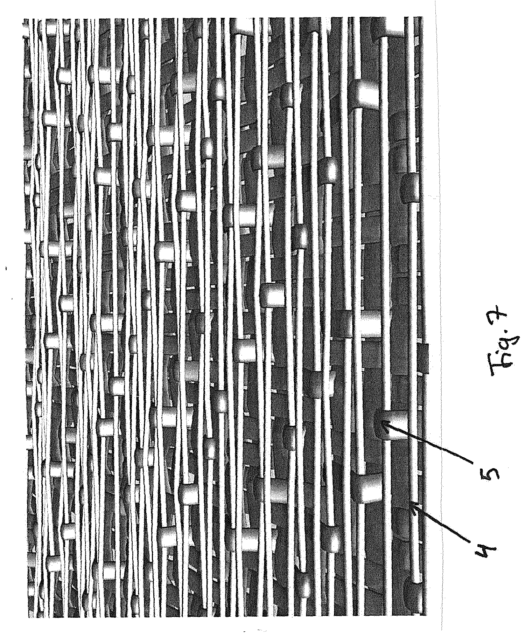

In der Figur 7 ist schematisch das Ausführungsbeispiel der Figur 6 im Detail dargestellt. Die hochfesten Fasern 5 binden die thermoplastische Fasern 4 an das zweite Gewebe 2, so dass die Gewebestruktur 3 entsteht.

Bezugszeichenliste

A    Anknüpfungspunkt
1    erstes Gewebe (erste Gewebelage, thermoplastische Gewebelage)
2    zweites Gewebe (zweite Gewebelage, hochfeste Gewebelage)
3    Doppelgewebe
4    thermoplastische Fasern
5    hochfeste Fasern
6    Gelegelage (thermoplastische Fasern)

**Patentansprüche**

1. Penetrationshemmender Artikel umfassend mindestens eine Gewebestruktur (3), welche thermoplastische Fasern und hochfeste Fasern aufweist, wobei die hochfesten Fasern eine Festigkeit von wenigstens 1100 MPa gemäß ASTM D-885 haben, wobei die hochfesten Fasern miteinander zu einem Gewebe (2) der Gewebestruktur (3) verbunden sind, wobei die thermoplastischen Fasern einen Gewichtsanteil bezogen auf die Gewebestruktur (3) von 5 -35% haben, **dadurch gekennzeichnet, dass** die thermoplastischen Fasern in Form eines Geleges (6) auf dem Gewebe (2) liegen und über mindestens einen Kett- und/oder Schussfaden des Gewebes (2) aus hochfesten Fasern mit dem Gewebe (2) verbunden sind und kein zusätzlicher Bindefaden oder nicht textiles Bindungsmittel für die Verbindung zwischen dem Gewebe (2) und den thermoplastischen Fasern vorgesehen ist.

2. Penetrationshemmender Artikel umfassend mindestens eine Gewebestruktur (3), welche thermoplastische Fasern und hochfeste Fasern aufweist, wobei die thermoplastischen Fasern einen Gewichtsanteil bezogen auf die Gewebestruktur (3) von 5 -35% haben, wobei die hochfesten Fasern eine Festigkeit von wenigstens 1100 MPa gemäß ASTM D-885 haben, wobei die hochfesten Fasern miteinander zu einem Gewebe (2) der Gewebestruktur (3) verbunden sind, **dadurch gekennzeichnet, dass** die thermoplastischen Fasern miteinander zu einem weiteren Gewebe (1) verbunden sind, wobei das weitere Gewebe (1) aus thermoplastischen Fasern auf dem Gewebe (2) aus hochfesten Fasern liegt und über mindestens einen Kett- und/oder Schussfaden mit dem Gewebe (2) aus hochfesten Fasern verbunden ist, wobei das Gewebe (2) aus hochfesten Fasern und das weitere Gewebe (1) aus thermoplastischen Fasern jede für sich gewebt sind und kein zusätzlicher Bindefaden oder nicht textiles Bindungsmittel für die Verbindung zwischen dem Gewebe (2) und den thermoplastischen Fasern vorgesehen ist.

3. Penetrationshemmender Artikel nach Anspruch 1 oder Anspruch 2, **dadurch gekennzeichnet, dass** die thermoplastischen Fasern einen Gewichtsanteil bezogen auf die Gewebestruktur (3) von 10-15% haben.

4. Penetrationshemmender Artikel nach mindestens einem der vorhergehenden Ansprüche, **dadurch gekennzeichnet, dass** die hochfesten Fasern einen Gewichtsanteil bezogen auf die Gewebestruktur (3) von 65-95%, vorzugsweise von 80-90% haben.

5. Penetrationshemmender Artikel nach mindestens einem der vorhergehenden Ansprüche, **dadurch gekennzeichnet, dass** das Gewebe (2) aus hochfesten Fasern mit den thermoplastischen Fasern über Anknüpfungspunkte (A) miteinander verbunden sind, wobei eine Fläche von 100 cm$^2$ der Gewebestruktur (3) 20 bis 150 Anknüpfungspunkte (A) aufweist.

6. Penetrationshemmender Artikel nach Anspruch 5, **dadurch gekennzeichnet, dass** eine Fläche von 100 cm$^2$ der Gewebestruktur (3) 30 bis 50 Anknüpfungspunkte (A) aufweist.

7. Penetrationshemmender Artikel nach Anspruch 2, **dadurch gekennzeichnet, dass** das weitere Gewebe (1) aus thermoplastischen Fasern eine Gewebedichte nach Walz aufweist, die unter 30% liegt.

8. Penetrationshemmender Artikel nach mindestens einem der vorhergehenden Ansprüche, **dadurch gekennzeichnet, dass** das Gewebe (2) aus hochfesten Fasern eine Gewebedichte nach Walz von über 30 % aufweist, bevorzugt von über 45%.

9. Penetrationshemmender Artikel nach mindestens einem der vorhergehenden Ansprüche, **dadurch gekennzeichnet, dass** die thermoplastischen Fasern aus Polyamid, Polyester oder Polyurethan bestehen, die als Monofilamente und/oder Multifilamente in der Gewebestruktur (3) vorliegen.

10. Penetrationshemmender Artikel nach mindestens einem der vorhergehenden Ansprüche, **dadurch gekennzeichnet, dass** die hochfesten Fasern Aramidfasern, Fasern aus Aramid-Copolymer, Fasern aus Polyethylen mit einem ultrahohem Molekulargewicht, Fasern aus Polypropylen mit ultrahohem Molekulargewicht, Polybenzoxazolfasern und/oder Polybenzothiazolfasern sind.

11. Penetrationshemmender Artikel nach Anspruch 2, **dadurch gekennzeichnet, dass** die Kett- und/oder Schußfäden des weiteren Gewebes aus thermoplastischen Fasern (1) die gleiche mittlere Einarbeitung nach ISO 7211/3 aufweisen wie die Kett- und/oder Schussfäden des Gewebes (2) aus hochfesten Fasern oder, dass die Schussfäden und Kettfäden des Gewebes aus hochfesten Fasern oder des weiteren Gewebes (1) aus thermoplastischen Fasern (1,2) eine gleiche mittlere Einarbeitung nach ISO 7211/3 aufweisen.

12. Penetrationshemmender Artikel nach Anspruch 1, **dadurch gekennzeichnet, dass** die Kett- und/oder Schussfäden des Gewebes (2) aus hochfesten Fasern die gleiche mittlere Einarbeitung nach ISO 7211/3 aufweisen.

**13.** Penetrationshemmender Artikel nach Anspruch 1, **dadurch gekennzeichnet, dass** die thermoplastischen Fasern in Form eines unidirektionalen Geleges vorliegen.

**14.** Verfahren zur Herstellung eines penetrationshemmenden Artikels umfassend mindestens eine Gewebestruktur (3) nach Anspruch 1 oder 2, **dadurch gekennzeichnet, dass** mindestens eine der beschriebenen Gewebestruktur (3) nach Anspruch 1 oder 2 mit mindestens einer weiteren Textillage unter Druck und einer Temperatur gleich oder höher dem Schmelzpunkt der thermoplastischen Faser und unter dem Schmelzpunkt der hochfesten Faser ohne Präimprägnierung zu einer Platte verpresst wird.

**Claims**

**1.** Penetration-resistant article comprising at least one woven fabric structure (3) having thermoplastic fibres and high-tenacity fibres, with the high-tenacity fibres having a tenacity of at least 1100 MPa in accordance with ASTM D-885, wherein the high-tenacity fibres are linked together to form a woven fabric (2) of the woven fabric structure (3), wherein the thermoplastic fibres have a percentage by weight relative to the weight of the woven fabric structure (3) of 5 to 35%, **characterised in that** the thermoplastic fibres in the form of a non-crimp fabric (6) lie on the woven fabric (2) and are joined to the woven fabric (2) by at least one warp thread and/or weft thread of the woven fabric (2) of high-tenacity fibres and no additional joining thread or non-textile joining agent is provided for the connection between the woven fabric (2) and the thermoplastic fibres.

**2.** Penetration-resistant article comprising at least one woven fabric structure (3) having thermoplastic fibres and high-tenacity fibres, wherein the thermoplastic fibres have a percentage by weight relative to the weight of the woven fabric structure (3) of 5 to 35%, wherein the high-tenacity fibres have a tenacity of at least 1100 MPa in accordance with ASTM D-885, and the high-tenacity fibres are joined together to form a woven fabric (2) of the woven fabric structure (3), **characterised in that** the thermoplastic fibres are joined together to form a further woven fabric (1), wherein the further woven fabric (1) of thermoplastic fibres lies on the woven fabric (2) of high-tenacity fibres and is joined to the woven fabric (2) of high-tenacity fibres by at least one warp and/or weft thread, wherein the woven fabric (2) of high-tenacity fibres and the further woven fabric (1) of thermoplastic fibres are each in themselves woven and no additional joining thread or non-textile joining agent is provided for the connection between the woven fabric (2) and the thermoplastic fibres.

**3.** Penetration-resistant article according to Claim 1 or Claim 2, **characterised in that** the thermoplastic fibres have a percentage by weight relative to the woven fabric structure (3) of 10 to 15%.

**4.** Penetration-resistant article according to at least one of the preceding claims, **characterised in that** the high-tenacity fibres have a percentage by weight relative to the woven fabric structure (3) of 65 to 95%, preferably of 80 to 90%.

**5.** Penetration-resistant article according to at least one of the preceding claims, **characterised in that** the woven fabric (2) of high-tenacity fibres is joined together with the thermoplastic fibres at tying points (A), wherein an area of 100 cm$^2$ of the woven fabric structure (3) has 20 to 150 tying points (A).

**6.** Penetration-resistant article according to Claim 5, **characterised in that** an area of 100 cm$^2$ of the woven fabric structure (3) has 30 to 50 tying points (A).

**7.** Penetration-resistant article according to Claim 2, **characterised in that** the further woven fabric (1) of thermoplastic fibres has a fabric density according to Walz of less than 30%.

**8.** Penetration-resistant article according to at least one of the preceding claims, **characterised in that** the woven fabric (2) of high-tenacity fibres has a Walz fabric density according to Walz of over 30%, preferably of over 45%.

**9.** Penetration-resistant article according to at least one of the preceding claims, **characterised in that** the thermoplastic fibres in the woven fabric structure (3) are made of polyamide, polyester or polyurethane in the form of monofilaments and/or multifilaments.

**10.** Penetration-resistant article according to at least one of the preceding claims, **characterised in that** the high-tenacity fibres are aramid fibres, fibres of aramid copolymer, fibres of polyethylene with ultra-high molecular weight, fibres of polypropylene with ultra-high molecular weight, polybenzoxazole fibres and/or polybenzothiazole fibres.

**11.** Penetration-resistant article according to Claim 2, **characterised in that** the warp and/or weft threads of the further woven fabric (1) of thermoplastic fibres have the same average take-up according to ISO 7211/3 as the warp and/or weft threads of the woven fabric (2) of high-tenacity fibres, or that the weft threads and warp threads of the fabric of high-tenacity fibres or of the further woven fabric (1) of thermoplastic fibres (1,2) have the same average take-up according to ISO 7211/3.

**12.** Penetration-resistant article according to Claim 1, **characterised in that** the warp and/or weft threads of the woven fabric (2) of high-tenacity fibres have the same average take-up according to ISO 7211/3.

**13.** Penetration-resistant article according to Claim 1, **characterised in that** the thermoplastic fibres have the form of a unidirectional non-crimp fabric.

**14.** Method for the production of a penetration-resistant article comprising at least one woven fabric structure (3) according to Claim 1 or 2, **characterised in that** at least one woven fabric structure (3) described according to Claim 1 or 2 is compacted with at least one further textile layer under pressure and at a temperature equal to or higher than the melting point of the thermoplastic fibre and below the melting point of the high-tenacity fibre without pre-impregnation to form a sheet.

**Revendications**

**1.** Article anti-pénétration comprenant au moins une structure de tissu (3) qui présente des fibres thermoplastiques et des fibres haute résistance, les fibres haute résistance ayant une résistance d'au moins 1 100 MPa selon ASTM D-885, les fibres haute résistance étant reliées entre elles pour former un tissu (2) de la structure de tissu (3), les fibres thermoplastiques ayant une proportion en poids, rapportée à la structure de tissu (3), allant de 5 à 35 %, **caractérisé en ce que** les fibres thermoplastiques sont posées sous la forme d'une structure non tissée (6) sur le tissu (2) et sont reliées au tissu (2) par l'intermédiaire d'au moins un fil de chaîne et/ou fil de trame du tissu (2) en fibres haute résistance, et il n'est pas prévu de fil de liage supplémentaire ou de moyen de liage non textile pour la liaison entre le tissu (2) et les fibres thermoplastiques.

**2.** Article anti-pénétration comprenant au moins une structure de tissu (3) qui présente des fibres thermoplastiques et des fibres haute résistance, les fibres thermoplastiques ayant une proportion en poids, rapportée à la structure de tissu (3), allant de 5 à 35 %, les fibres haute résistance ayant une résistance d'au moins 1 100 MPa selon ASTM D-885, les fibres haute résistance étant reliées entre elles pour former un tissu (2) de la structure de tissu (3), **caractérisé en ce que** les fibres thermoplastiques sont reliées entre elles pour former un tissu (1) supplémentaire, le tissu (1) supplémentaire en fibres thermoplastiques étant posé sur le tissu (2) en fibres haute résistance et étant relié au tissu (2) en fibres haute résistance par l'intermédiaire d'au moins un fil de chaîne et/ou fil de trame, le tissu (2) en fibres haute résistance et le tissu (1) supplémentaire en fibres thermoplastiques étant tissés chacun séparément, et il n'est pas prévu de fil de liage supplémentaire ou de moyen de liage non textile pour la liaison entre le tissu (2) et les fibres thermoplastiques.

**3.** Article anti-pénétration selon la revendication 1 ou la revendication 2, **caractérisé en ce que** les fibres thermoplastiques ont une proportion en poids de 10 à 15 %, rapportée à la structure de tissu (3).

**4.** Article anti-pénétration selon au moins l'une des revendications précédentes, **caractérisé en ce que** les fibres haute résistance ont une proportion en poids, rapportée à la structure de tissu (3), allant de 65 à 95 %, de préférence de 80 à 90 %.

**5.** Article anti-pénétration selon au moins l'une des revendications précédentes, **caractérisé en ce que** le tissu (2) en fibres haute résistance est relié aux fibres thermoplastiques par l'intermédiaire de points de rattachement (A), sachant qu'une surface de 100 cm$^2$ de la structure de tissu (3) présente de 20 à 150 points de rattachement (A)

**6.** Article anti-pénétration selon la revendication 5, **caractérisé en ce qu'**une surface de 100 cm$^2$ de la structure de tissu (3) présente de 30 à 50 points de rattachement (A).

**7.** Article anti-pénétration selon la revendication 2, **caractérisé en ce que** le tissu (1) supplémentaire en fibres thermoplastiques présente une densité de tissu selon Walz qui est inférieure à 30 %.

**8.** Article anti-pénétration selon au moins l'une des revendications précédentes, **caractérisé en ce que** le tissu (2) en fibres haute résistance présente une densité de tissu selon Walz qui est supérieure à 30 %, de préférence supérieure à 45 %.

**9.** Article anti-pénétration selon au moins l'une des revendications précédentes, **caractérisé en ce que** les fibres thermoplastiques sont en polyamide, polyester ou polyuréthanne, qui sont présents en tant que monofilaments et/ou multifilaments dans la structure de tissu (3).

**10.** Article anti-pénétration selon au moins l'une des revendications précédentes, **caractérisé en ce que** les fibres haute résistance sont des fibres aramide, des fibres en copolymère d'aramide, des fibres en polyéthylène à poids moléculaire ultra-élevé, des fibres en polypropylène à poids moléculaire ultra-élevé, des fibres de polybenzoxazole et/ou des fibres de polybenzothiazole.

**11.** Article anti-pénétration selon la revendication 2, **caractérisé en ce que** les fils de chaîne et/ou de trame du tissu supplémentaire en fibres thermoplastiques (1) présentent le même embuvage moyen selon ISO 7211/3 que les fils de chaîne et/ou de trame du tissu (2) en fibres haute résistance, ou que les fils de trame et les fils de chaîne du tissu en fibres haute résistance ou du tissu (1) supplémentaire en fibres thermoplastiques (1, 2) présentent un même embuvage moyen selon ISO 7211/3.

12. Article anti-pénétration selon la revendication 1, **caractérisé en ce que** les fils de chaîne et/ou de trame du tissu (2) en fibres haute résistance présentent le même embuvage moyen selon ISO 7211/3.

13. Article anti-pénétration selon la revendication 1, **caractérisé en ce que** les fibres thermoplastiques sont présentes sous la forme d'une structure non tissée unidirectionnelle.

14. Procédé de fabrication d'un article anti-pénétration comprenant au moins une structure de tissu (3) selon la revendication 1 ou 2, **caractérisé en ce qu'**au moins une des structures de tissu (3) décrites selon la revendication 1 ou 2 est pressée avec au moins une couche textile supplémentaire, sous pression et à une température égale ou supérieure au point de fusion des fibres thermoplastiques et inférieure au point de fusion des fibres haute résistance, sans imprégnation préalable, pour obtenir une plaque.

Fig 1

Fig. 2

Fig 3

Fig 4

Fig 5

EP 2 958 737 B1

Fig. 6

17

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5168006 A
- EP 0417827 A
- DE 102011102342
- EP 0408830 A
- DE 102011102

**In der Beschreibung aufgeführte Nicht-Patentliteratur**

- **F. WALZ ; J. LUIBRAND.** Textil-Praxis. Robert Kochhammer Verlag, 1947, 330-335, 366-370